# EUROPEAN PATENT SPECIFICATION

(11) **EP 0 954 370 B1**
(45) Date of publication and mention of the grant of the patent: **09.04.2003**
(21) Application number: 97901157.4
(22) Date of filing: 22.01.1997
(51) Int. Cl.: B01D 53/94, B01J 23/66, B01D 53/86

(54) **REDUCTION OF NITROGEN OXIDE**
VERMINDERUNG VON STICKOXID
REDUCTION DE L'OXYDE D'AZOTE

(43) Date of publication of application: 10.11.1999
(73) Proprietor: Anglo American Research Laboratories (Proprietary) Limited, Johannesburg 2001 (ZA)
(72) Inventor: TUMILTY, James, Anthony, Jude, Sandton (ZA); GAFIN, Anthony, Harold, Johannesburg 2192 (ZA)
(74) Representative: Towler, Philip Dean
(86) International application number: GB9700184
(87) International publication number: WO98032524

(56) References cited:
- WO-A-96/14153
- FR-A- 2 344 323
- US-A- 4 162 235

## Description

### BACKGROUND OF THE INVENTION

This invention relates to the reduction of nitrogen oxide and to the use of a catalyst for the reduction of nitrogen oxide and the oxidation of carbon monoxide and hydrocarbons.

The reduction of pollution from industrial processes and the protection of the environment is one of the major issues facing the world today. The internal combustion engine contributes significantly to the pollution levels in the atmosphere. Many countries of the world now have laws directed at reducing the emission of noxious gases from internal combustion engines. A reduction in the emission of noxious gases from internal combustion engines may be achieved by the use of suitable catalysts. By way of example, some of the noxious exhaust gases of an internal combustion engine are carbon monoxide and hydrocarbons. Platinum or palladium may be used to catalyse oxidation of these gases. Rhodium may be used for reduction of the toxic nitrogen oxides.

Gold-containing catalysts consisting of gold supported on an oxide such as cobalt oxide, iron oxide, manganese oxide or the like are also known to have utility in the oxidation of carbon monoxide and hydrocarbons.

EP-A-602 602 describes a catalyst for tile catalytic reduction of nitrogen oxide using hydrocarbon as a reducing agent. The catalyst comprises at least one element of the platinum group and gold. The catalyst may also comprise a metallic oxide selected from the group of cerium oxide, lanthanum oxide, neodymium oxide, germanium oxide and gallium oxide. The carrier for the catalyst may be alumina, silica, silica-alumina, titania, zirconia and II-type zeolite. The gold and platinum group element are captured on the carrier by ion exchange.

WO-A-96/14153 discloses a catalyst comprising an oxide support selected from zirconium oxide, cerium oxide and mixtures thereof having captured thereon a noble metal in a catalytically effective form. The catalyst may also contain a transition metal in oxide form, preferably with a spinel structure.

The catalyst produced by this method is effective in catalysing the oxidation of carbon monoxide and hydrocarbons and reducing nitrous oxide gases.

### SUMMARY OF THE INVENTION

According to a first aspect of the invention, a method of reducing a nitrogen oxide includes the steps of contacting the nitrogen oxide with a catalyst which comprises an oxide support formed of a mixture of zirconium oxide and cerium oxide having captured thereon gold and cobalt oxide, the gold being complexed with the cobalt characterised in that the reduction occurs in the presence of a sulphur species at a temperature of at least 300°C.

The nitrogen oxide will have the formula NOₓ. Examples of such oxides are nitrous oxide, nitric oxide, nitrogen trioxide, dinitrogen tetroxide, nitrogen dioxide, dinitrogen pentoxide and trinitrogen tetroxide and mixtures containing two or more such oxides. The reduction of the nitrogen oxide will generally be to nitrogen and oxygen.

The invention has particular application to the purification of noxious gases from the exhaust gases of internal combustion engines. Such noxious gases include nitrogen oxides, hydrocarbons and carbon monoxide. The catalysts may be used to reduce the nitrogen oxides producing oxygen which will enhance the ability of the same catalyst to oxidise the hydrocarbons and carbon monoxide.

According to a second aspect of the invention, there is provided the use of a catalyst comprising an oxide support formed of a mixture of zirconium oxide and cerium oxide having captured thereon gold and cobalt oxide, the gold being complexed with the cobalt, in a method for the reduction of a nitrogen oxide and the oxidation of carbon monoxide and hydrocarbons characterised in that the reduction of nitrogen occurs in the presence of a sulphur species at a temperature of at least 300°C.

### DESCRIPTION OF EMBODIMENTS

The zirconium oxide/cerium oxide support in the catalyst used in the method of the invention will generally be a porous support and may further comprise titanium oxide. Generally, the oxide will be present in the catalyst in an amount of at least 50 percent by mass of the catalyst and preferably at least 60 percent by mass of the catalyst. The preferred oxide support is a mixture of zirconium oxide and cerium oxide. With such a mixture, the cerium oxide will typically constitute at least 50 percent by mass of the mixture.

The oxide support will preferably have a large surface area, typically 60 to 200m²/g. The support may take the form of a monolith, extrudate, pellets, rings or pearls, but is preferably a powder.

In the catalyst which is used in the method of the invention, the gold is complexed with cobalt. The cobalt is preferably captured on the support as an oxide which has a spinel structure. Complexing thus takes place between the gold and the oxide having the spinel structure. The gold is not in metallic form.

The concentration of gold on the oxide support will be low and generally less than 2 percent by mass of the catalyst. The atomic ratio of gold to transition metal will typically be in the range 1:5 to 1:200.

The catalyst may contain a dopant capable of improving the thermal stability thereof. Suitable dopants are alkaline earth metal oxides, and oxides of metals of the lanthanide series.

Particularly suitable catalysts for use in the method of the invention are those disclosed in WO 96/14153. The disclosure of this publication is incorporated herein by reference.

The catalyst disclosed in WO 96/14153 is one which utilises zirconium oxide, cerium oxide or a mixture thereof as the oxide support. Preferably the oxide support is a mixture of zirconium oxide and cerium oxide with cerium oxide typically constituting at least 50 percent by mass of the mixture.

In the catalyst of WO 96/14153, the transition metal is generally in oxide form, the oxide having a spinel structure. Complexing takes place between the gold and the transition metal oxide.

The catalysts described above are preferably made by a method which involves impregnating the oxide support with a solution of the transition metal, optionally drying the product, exposing the impregnated product to a reducing atmosphere such as hydrogen or carbon monoxide at a temperature exceeding 300°C, contacting the this treated product with a solution of the noble metal and drying the impregnated product. The catalyst may he activated by exposing it to a temperature of at least 300°C, typically 300 to 500°C, in the presence of oxygen. The oxygen may be air or oxygen mixed with another gas.

The catalysts described above have been found to be particularly suitable in the reduction of nitrogen oxide alone or mixed with carbon monoxide and/or a hydrocarbon in the presence of a sulphur species. Thus, the catalysts are particularly useful in catalysing the reduction of a nitrogen oxide and the oxidation of carbon monoxide and hydrocarbons in the exhaust gas of an internal combustion engine.

Catalysts of the type disclosed in WO 96/14153 (Au/Co₃O₄/ZrO₂CeO₂TiO₂) were compared with a commercially available platinum group metal (PGM) auto-catalyst and an Au/Co₃O₄/Al₂O₃ catalyst disclosed in WO 94/19092 in the oxidation of carbon monoxide and hydrocarbons and the reduction of nitrogen oxide. The tests were carried out in conditions simulating the exhaust gas of an internal combustion engine, to evaluate the suitability of the catalyst for conversion of exhaust gases from a combustion engine. The results obtained are set out in Tables I and II.

Table III sets out the data obtained in tests carried out at a gas flow simulating conditions of exhaust gases from a combustion engine, using catalysts identified as P1 to P4. All these catalysts use a mixture of zirconium oxide and cerium oxide as the support and have gold and cobalt oxide captured thereon. The cobalt oxide had a spinel structure and the gold was complexed therewith. The catalysts P1 and P2 had no stabilisers, whilst the catalyst P3 had lanthanum oxide as a stabiliser and P4 had barium oxide as a stabiliser. The tests were carried out in the presence and absence of sulphur dioxide. It will be noted from the data set out in Tables I to III that the catalysts were effective in reducing nitrogen oxide and oxidising carbon monoxide and hydrocarbons.

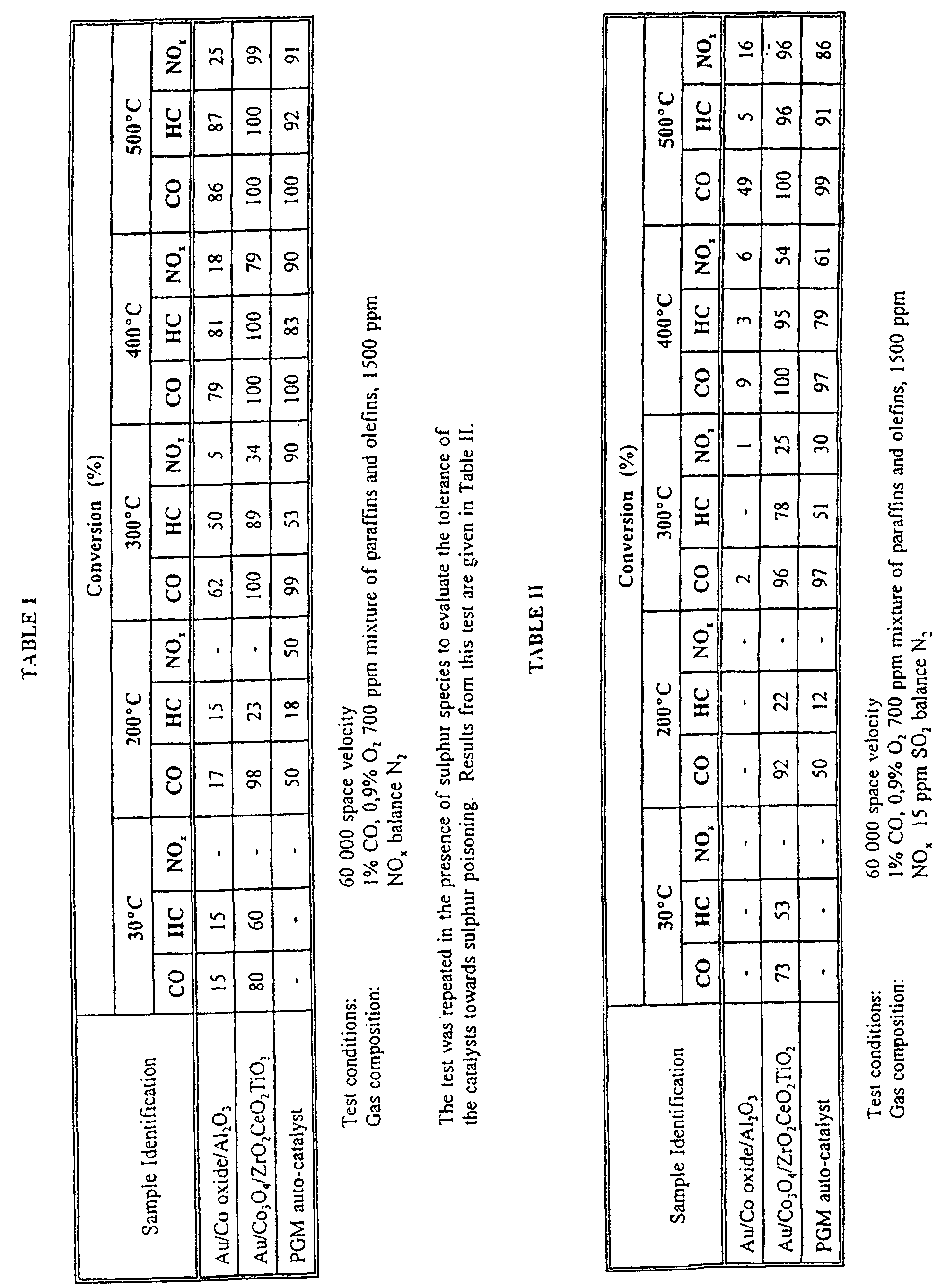

**TABLE III**

| Sample Identification | Test Conditions | **Conversion (%)** | | | |
|---|---|---|---|---|---|
| | | **300°C** | | **500°C** | |
| | | **CO** | **NO**_{**x**} | **CO** | **NO**_{**x**} |
| P1 | | 89.8 | 94.9 | 99.3 | 98.3 |
| | +SO₂ | 72.0 | 73.5 | 97.5 | 98.0 |
| P2 | | 92.9 | 33.0 | 94.5 | 94.9 |
| | +SO₂ | 78.2 | 12.5 | 84.2 | 37.7 |
| P3 | | 97.3 | 54.8 | 99.8 | 96.5 |
| | +SO₂ | 89.6 | 20.8 | 98.2 | 94.6 |
| P4 | | 96.0 | 58.7 | 99.6 | 97.2 |
| | +SO₂ | 90.7 | 23.3 | 98.9 | 92.3 |
| 100,000 Space Velocity | | | | | |

## Claims

1. A method of reducing nitrogen oxide which includes the step of contacting the nitrogen oxide with a catalyst which comprises an oxide support formed of a mixture of zirconium oxide and cerium oxide having captured thereon gold and cobalt oxide, the gold being complexed with the cobalt, **characterised in that** the reduction occurs in the presence of a sulphur species at a temperature of at least 300°C.

2. A method according to claim 1 wherein the oxide support is a porous support.

3. A method according to claim 1 or claim 2 wherein the cobalt oxide captured on the support has a spinel structure.

4. A method according to any one of the preceding claims wherein the concentration of gold on the support is less than 2 percent by mass of the catalyst.

5. A method according to any one of the preceding claims wherein the atomic ratio of gold to transition metal is in the range 1:5 to 1:200.

6. A method according to any one of the preceding claims wherein the oxide support further comprises titanium oxide.

7. A method according to any one of the preceding claims wherein the oxide support is present in the catalyst in an amount of at least 60 percent by mass of the catalyst.

8. A method according to claim 1 wherein the cerium oxide constitutes at least 50 percent by mass of the mixture.

9. A method according to any one of the preceding claims wherein the catalyst also contains a dopant capable of improving the thermal stability thereof.

10. A method according to claim 9 wherein the dopant is selected from alkaline earth metal oxides, and oxides of metals of the lanthanide series.

11. A method according to any one of the preceding claims wherein the nitrogen oxide is nitrous oxide, nitric oxide, nitrogen trioxide, dinitrogen tetroxide, nitrogen dioxide, dinitrogen pentoxide, trinitrogen tetroxide or a mixture containing two or more of such oxides.

12. A method according to any one of the preceding claims wherein the nitrogen oxide is mixed with a hydrocarbon and/or carbon monoxide.

13. A method according to any one of the preceding claims wherein the nitrogen oxide is present in the exhaust gas of an internal combustion engine.

14. Use of a catalyst comprising an oxide support formed of a mixture of zirconium oxide and cerium oxide having captured thereon gold and cobalt oxide, the gold being complexed with the cobalt, in a method for the reduction of nitrogen oxide and the oxidation of carbon monoxide and a hydrocarbon, **characterised in that** the reduction occurs in the presence of a sulphur species at a temperature of at least 300°C.

15. Use according to claim 14 in a method wherein the nitrogen oxide is mixed with the carbon monoxide and the hydrocarbon.

16. Use according to claim 15 wherein the nitrogen oxide is nitrous oxide, nitric oxide, nitrogen trioxide, dinitrogen tetroxide, nitrogen dioxide, dinitrogen pentoxide, trinitrogen tetroxide or a mixture containing two or more of such oxides.

17. Use according to claim 16 wherein the nitrogen oxide is present in the exhaust gas of an internal combustion engine.

18. Use according to claim 14 wherein the oxide support further comprises titanium oxide.

19. A method according to claim 1 wherein the sulphur species is sulphur dioxide.

20. A method according to claim 1 wherein the reduction occurs at a temperature exceeding 400°C.

## Patentansprüche

1. Verfahren zum Reduzieren von Stickstoffoxid, welches den Verfahrensschritt eines Inkontaktbringens des Stickstoffoxides mit einem Katalysator umfaßt, welcher einen Oxidträger aufweist, der aus einer Mischung von Zirkonoxid und Ceroxid mit angelagertem Gold und Kobaltoxid gebildet ist, wobei Gold und Kobalt einen Komplex bilden, **dadurch gekennzeichnet, daß** die Reduktion in Gegenwart einer Schwefelspezies bei einer Temperatur von wenigstens 300°C erfolgt.

2. Verfahren nach Anspruch 1, **dadurch gekennzeichnet, daß** der Oxidträger ein poröser Träger ist.

3. Verfahren nach Anspruch 1 oder 2, **dadurch gekennzeichnet, daß** das an dem Träger angelagerte Kobaltoxid eine Spinellstruktur aufweist.

4. Verfahren nach einem der vorangehenden Ansprüche, **dadurch gekennzeichnet, daß** die Gold-Konzentration auf dem Träger weniger als 2 Mass.-% des Katalysators beträgt.

5. Verfahren nach einem der vorangehenden Ansprüche, **dadurch gekennzeichnet daß** das atomare Verhältnis von Gold zu Übergangsmetall im Bereich zwischen 1:5 und 1:200 beträgt.

6. Verfahren nach einem der vorangehenden Ansprüche, **dadurch gekennzeichnet, daß** der Oxidträger fernen Titanoxid aufweist.

7. Verfahren nach einem der vorangehenden Ansprüche, **dadurch gekennzeichnet, daß** der Oxidträger in dem Katalysator mit einem Anteil von wenigstens 60 Mass.-% bezogen auf den Katalysator vorhanden ist.

8. Verfahren nach Anspruch 1, **dadurch gekennzeichnet, daß** das Ceroxid wenigstens 50 Mass.-% der Mischung bildet.

9. Verfahren nach einem der vorangehenden Ansprüche, **dadurch gekennzeichnet, daß** der Katalysator einen zur Verbesserung seiner thermischen Stabilität geeigneten Dopanten aufweist.

10. Verfahren nach Anspruch 9, **dadurch gekennzeichnet, daß** der Dopant aus der Gruppe der Metalloxide der Erdalkalien und der Lanthaniden ausgewählt ist.

11. Verfahren nach einem der vorangehenden Ansprüche, **dadurch gekennzeichnet, daß** das Stickstoffoxid Distickstoffoxid, Stickstoffmonoxid, Stickstofrtrioxid, Distickstofftetroxid, Stickstoffdioxid, Distickstoffpentoxid, Tristickstofftetroxid oder eine zwei oder mehrere solcher Oxide enthaltende Mischung ist.

12. Verfahren nach einem der vorangehenden Ansprüche, **dadurch gekennzeichnet, daß** das Stickstoffoxid mit einem Kohlenwasserstoff und/oder Kohlenstoffmonoxid gemischt ist.

13. verfahren nach einem der vorangehenden Ansprüche, **dadurch gekennzeichnet, daß** das Stickstoffoxid im Abgas eines Verbrennungsmotors enthalten ist.

14. Verwendung eines Katalysators, welcher einen oxidträger aufweist, der aus einer Mischung aus Zirkonoxid und Ceroxid mit angelagertem Gold und Kobaltoxid gebildet ist, wobei Gold und Kobalt einen Komplex bilden, in einem Verfahren zum Reduzieren von Stickstoffoxid und Oxidieren von Kohlenstoffmonoxid und Kohlenwasserstoffen, **dadurch gekennzeichnet, daß** die Reduktion in Gegenwart einer Schwefelspezies bei einer Temperatur von wenigstens 300°C erfolgt.

15. verwendung nach Anspruch 14 in einem Verfahren, bei welchem das Stickstoffoxid mit dem Kohlenstoffmonoxid und dem Kohlenwasserstoff gemischt ist.

16. Verwendung nach Anspruch 15, **dadurch gekennzeichnet, daß** das Stickstoffoxid Distickstoffoxid, Stickstoffmonoxid, Stickstofftrioxid, Distickstofftetroxid, Stickstoffdioxid, Distickstoffpentoxid, Txistickstofftetroxid oder eine zwei oder mehrere solcher Oxide enthaltende Mischung ist.

17. Verwendung nach Anspruch 16, **dadurch gekennzeichnet, daß** das Stickstoffoxid im Abgas eines Verbrennungsmotors enthalten ist.

18. Verwendung nach Anspruch 14, **dadurch gekennzeichnet, daß** der Oxidträger ferner Titanoxid aufweist.

19. Verfahren nach Anspruch 1, **dadurch gekennzeichnet, daß** die Schwefelspezies Schwefeldioxid ist.

20. Verfahren nach Anspruch 1, **dadurch gekennzeichnet, daß** die Reduktion bei einer Temperatur oberhalb 400°C erfolgt.

## Revendications

1. Procédé de réduction d'oxyde d'azote qui comprend l'étape de mise en contact de l'oxyde d'azote avec un catalyseur qui comprend un support oxyde formé d'un mélange d'oxyde de zirconium et d'oxyde de cérium ayant piégé sur celui-ci de l'oxyde de cobalt et d'or, l'or étant complexé avec le cobalt, **caractérisé en ce que** la réduction se produit en présence d'une espèce soufrée à une température d'au moins 300°C.

2. Procédé selon la revendication 1, dans lequel le support oxyde est un support poreux.

3. Procédé selon la revendication 1 ou 2, dans lequel l'oxyde de cobalt piégé sur la support a une structure epinelle.

4. Procédé selon l'une quelconque des revendications précédentes, dans lequel la concentration en or sur le support est inférieure à 2 pour cent en masse du catalyseur.

5. Procédé selon l'une quelconque des revendications précédentes, dans lequel le rapport atomique de l'or sur le métal de transition est dans la plage de 1/5 à 1/200.

6. Procédé selon l'une quelconque des revendications précédantes, dans lequel le support oxyde comprend de plus de l'oxyde de titane.

7. Procédé selon l'une quelconque des revendications précédentes, dans lequel le support oxyde est présent dans le catalyseur dans une quantité d'au moins 60 pour cent en masse du catalyseur.

8. Procédé selon la revendication 1, dans lequel l'oxyde de cérium constitue au moins 50 pour cent en masse du mélange.

9. Procédé selon l'une quelconque des revendications précédentes, dans lequel le catalyseur contient aussi un dopant capable d'améliorer la stabilité thermique de celui-ci.

10. Procédé selon la revendication 9, dans lequel le dopant est choisi parmi des oxydes de métaux alcalino-terreux, et des oxydes de métaux de la série des lanthanides.

11. Procédé selon l'une quelconque des revendications précédentes, dans lequel l'oxyde d'azote est l'oxyde nitreux, l'oxyde nitrique, le trioxyde d'azote, le tétraoxyde de diazote, le dioxyde d'azote, le pentoxyde de diazote, le tétraoxyde de triazote ou un mélange contenant deux ou plusieurs de cas oxydes.

12. Procédé selon l'une quelconque des revendications précédentes, dans lequel l'oxyde d'azote est mélangé avec un hydrocarbure et/ou du monoxyde de carbone.

13. Procédé selon l'une quelconque des revendications précédentes, dans laquel l'oxyde d'azote est présent dans le gaz d'échappement d'un moteur à combustion interne.

14. Utilisation d'un catalyseur comprenant un support oxyde formé d'oxyde de zirconium et d'oxyde de cérium ayant piégé sur celui-ci de l'oxyde de cobalt et d'or, l'or étant complexé avec le cobalt, dans un procédé pour la réduction d'oxyda d'azote et l'oxydation du monoxyde de carbone et d'un hydrocarbure, **caractérisée en ce que** la réduction se produit en présence d'une espèce soufrée à une température d'au moins 300°C.

15. Utilisation selon la revendication 14, dans un procédé dans lequel l'oxyde d'azote est mélangé avec le monoxyde de carbone et l'hydrocarbure.

16. Utilisation selon la revendication 15, dans laquelle l'oxyde d'azote est l'oxyde nitreux, l'oxyde nitrique, le trioxyde d'azote, le tétraoxyds de diazote, le dioxyde d'azota, le pentoxyde de diazote, le tétraoxyde de triazote ou un mélange contenant deux ou plusieurs de ces oxydes.

17. Utilisation selon la revendication 16, dans laquelle l'oxyde d'azote est présent dans le gaz d'échappemant d'un moteur à combustion interne.

18. Utilisation selon la revendication 14, dans laquelle le support oxyde comprend de plus de l'oxyde de titane.

19. procédé selon la revendication 1, dans lequel l'espèce soufré est du dioxyde de soufre.

20. Procédé selon la revendication 1, dans lequel la réduction se produit à une température dépassant 400°C.
